# FASCICULE DE BREVET EUROPEEN

(11) **EP 0 426 579 B1**
(45) Date de publication et mention de la délivrance du brevet: **30.11.1994**
(21) Numéro de dépôt: 90420464.1
(22) Date de dépôt: 29.10.1990
(51) Int. Cl.: C22F 1/16, B21B 3/00, B21B 1/40, H01M 4/12, H01M 4/40

(54) **Procédé d'obtention de feuilles minces à base de lithium et son application à la réalisation de plaques négatives pour accumulateurs**
Verfahren zur Herstellung dünner Bänder auf Lithium-Basis und ihre Verwendung zur Produktion von negativen Akkumulatorelektroden
Process for production of thin lithium base strips and their use for making negative battery electrodes

(30) Priorité: 30.10.1989 FR 8914726
(43) Date de publication de la demande: 08.05.1991
(73) Titulaire: PECHINEY RECHERCHE (Groupement d'Intérêt Economique géré par l'ordonnance du 23 Septembre 1967), 92400 Courbevoie (FR)
(72) Inventeur: Raynaud, Guy-Michel, F-38120 St Egreve (FR); Regazzoni, Gilles, F-38100 Grenoble (FR); Nussbaum, Gilles, F-38100 Grenoble (FR); Reboul, Max, F-38120 St Egreve (FR)
(74) Mandataire: Mougeot, Jean-Claude

(56) Documents cités:
- EP-A- 0 143 562
- EP-A- 0 283 412
- DE-A- 3 027 309
- SU-A- 1 103 912
- US-A- 4 011 372
- PATENT ABSTRACTS OF JAPAN, vol. 7, no. 112 (M-215)[1257], 17 mai 1983;& JP-A-58 32 504 (MATSUSHITA DENKI SANGYO K.K.) 25-02-1983
- PATENT ABSTRACTS OF JAPAN, vol. 8, no. 90 (M-292)[1527], 25 avril 1984;& JP-A-59 7404 (CITIZEN TOKEI K.K.) 14-01-1984

## Description

L'invention est relative à un procédé d'obtention de feuilles minces à base de lithium et à son application à la réalisation de plaques négatives pour accumulateurs.

L'homme de l'art sait que le lithium est un métal qui outre une très grande réactivité avec l'air humide a de très faibles caractéristiques mécaniques et une forte tendance au collage sur la plupart des matériaux. Ce sont là autant de facteurs qui rendent difficile l'obtention de feuilles minces de lithium par laminage notamment lorsqu'il s'agit d'obtenir des épaisseurs inférieures à 200 µm. Certes, on peut y parvenir en prenant la précaution de travailler sous atmosphère d'air à faible taux d'humidité ou sous atmosphère de gaz rare, de multiplier les passes de laminage et d'utiliser des dispositifs anti-collage au laminage et/ou au bobinage mais les coûts de transformation sont alors trop élevés pour certaines applications potentielles de ce matériau telles que par exemple la réalisation de plaques négatives équipant certains accumulateurs à électrolyte organique.

Il est donc utile et nécessaire de pouvoir disposer de moyens convenables permettant de résoudre ce problème de laminabilité du lithium.

Certes, des solutions ont déjà été préconisées. C'est ainsi par exemple que dans le certificat d'auteur russe n° 1103912, il est décrit un procédé de laminage du lithium consistant à laminer le lithium à l'aide de cylindres refroidis à une température inférieure à 0°C et qui est caractérisé en ce que dans le but d'empêcher l'adhérence du lithium sur les cylindres lors du laminage et d'améliorer la qualité des feuilles obtenues, on exécute le laminage sous un gaz inerte, séché jusqu'à un point de rosée inférieur à la température de la surface de travail des cylindres; la température de la surface de travail des cylindres étant maintenue entre -1 et -100°C par introduction d'un agent de refroidissement (en l'occurrence de l'azote liquide) dans la cavité interne des cylindres. La température de la surface de travail est d'autant plus basse que l'épaisseur recherchée pour la feuille est faible. Ainsi, elle est de -30°C pour une feuille de 100 µm et -100°C pour 70 µm.

Par ailleurs, il est également indiqué dans ce document qu'on peut laminer le lithium entre des cylindres fabriqués en un matériau polymère.

Les deux solutions proposées font appel à des améliorations technologiques concernant le procédé de laminage lui-même et obligent à recourir soit à des aménagements particuliers : introduction de gaz liquéfié à l'intérieur des cylindres ou à des cylindres en matériau spécial.

La demanderesse a eu pour but de trouver une solution dans laquelle on n'apporte aucune modification au matériau de laminage classique utilisé mais où on cherche à modifier le comportement du lithium de façon à éviter une partie ou l'ensemble des précautions prises habituellement lors de l'opération de laminage.

Il est connu à ce propos, du brevet US 2692213, des conducteurs ou composants électriques en alliage magnésium-lithium contenant 30-45 % de Li qui sont laminés dans des conditions non précisées.

L'invention consiste en un procédé d'obtention de feuilles minces à base de lithium, dans lequel on :
- ajoute du magnésium à un bain de lithium fondu de manière à obtenir un alliage des deux métaux contenant entre 10 et 50 atomes pour cent de magnésium;
- solidifie l'alliage;
- transforme le solide en un produit de forme apte au laminage;
- lamine le produit à une épaisseur de 200 µm ou inférieure mais d'au moins 10 µm en passant ledit produit plusieurs fois entre des cylindres en acier à la température ambiante.

Ainsi, l'invention permet de rendre le lithium laminable dans les conditions normales de laminage en l'alliant au magnésium. Cela peut paraître d'autant plus surprenant que l'élément ajouté est connu pour avoir une très mauvaise aptitude à ce genre de transformation.

L'invention concerne également les feuilles minces et leur application qui Font l'Objet des revendications 5 et 6.

Les quantités introduites sont de préférence comprises entre 10 et 50 atomes pour cent car des quantités plus faibles conduisent aux mêmes difficultés qu'avec le lithium pur et des quantités plus importantes affectent trop fortement les propriétés électriques du lithium.

Cet alliage est élaboré par coulée conventionnelle suivant toutes les méthodes de métallurgie directe ou par métallurgie des poudres en respectant les précautions usuelles relatives à la fabrication du lithium. L'élaboration est effectuée à partir de matériaux commercialement purs et après solidification, l'alliage obtenu est mis sous une forme convenable au laminage, de préférence par filage ou par usinage, mais tout autre moyen classique de mise en forme peut être utilisé.
Le produit est alors laminé à la température ambiante entre des cylindres en acier de type classique et de préférence dans une atmosphère d'air ou d'argon sec.

En pratique, on procède à un nombre de passes d'autant plus grand que l'épaisseur initiale est forte, mais en tout cas on atteint des épaisseurs finales voisines de 10 µm sans avoir de problèmes de collage.

De préférence, l'alliage subit un traitement de recuit après au moins une passe de laminage, notamment lorsque l'épaisseur initiale est forte, car cela facilite l'obtention de bandes minces sans défauts de bord.

L'invention peut être illustrée à l'aide des exemples d'application suivants :

### EXEMPLE 1

On a procédé à la fabrication de feuilles d'alliages lithium-magnésium d'épaisseur 20 µm en ajoutant du magnésium à trois bains de lithium fondu sous argon de manière à obtenir trois compositions renfermant respectivement 50%, 30% et 10% d'atomes de magnésium.

Ces alliages ont été coulés sous forme de lingots qui ont été découpés en échantillons de 30x30 mm. Après nettoyage mécanique de la surface de ces échantillons en boîte à gants, on les a laminés à froid à l'aide de cylindres en acier.

Dans le cas du Li-50 Mg, on n'a constaté aucun problème jusqu'à une épaisseur de 200 µm; en dessous de cette épaisseur, on a noté un léger encrassage mais les produits avaient un bon aspect géométrique et métallique : une légère tendance au froissage a été observée pour les épaisseurs inférieures à 20 µm.

Dans le cas du Li-30 Mg, il n'y a eu aucun problème de collage et la tenue mécanique de la feuille était bonne jusqu'à 10 µm.

Dans le cas du Li-10 Mg, on a pu laminer facilement jusqu'à 200 µm. En-dessous de cette épaisseur, se produisent des collages, puis des fissures dans la feuille, ce qui montre la nécessité d'avoir une quantité suffisante de magnésium.

Par comparaison, pour des conditions opératoires identiques, le lithium pur se comporte encore plus mal que le Li-10 Mg.

L'amélioration de la laminabilité est surtout sensible pour des concentrations voisines de la moitié des concentrations maximales.

Ainsi, les alliages Li-Mg où Mg » 30% présentent une ductilité sensiblement plus faible que celle de l'alliage Li 30 Mg; ceux contenant moins de 10% de Mg se comportent de façon similaire au lithium pur. L'alliage Li 30 Mg présente donc un excellent compromis ductilité-collage.

L'invention concerne également l'application de feuilles minces obtenues à la réalisation de plaques négatives pour accumulateurs.

En effet, les alliages ci-dessus aisément laminables jusqu'à 10 µm possèdent des caractéristiques électrochimiques égales et même supérieures à celles du lithium pur.

Associés aux électrolytes comme le polyoxyde d'éthylène (POE), les verres (par exemple B₂O₃-X-Li₂O ...) et les sels de Lithium (LiI, LiClO₄, etc...) et à des plaques positives courantes composées de TiS₂, V₆O₁₃ et les plaques négatives élaborées à partir de tels alliages, conduisent à des accumulateurs présentant un excellent comportement en terme d'énergie massique et de nombre de cycles.

On sait, par ailleurs, que l'utilisation d'alliages de lithium permet de réduire les risques de formation de dendrites au cours des cyclages successifs pour les applications à fort densité de courant.

Cette application peut être illustrée à l'aide de l'exemple suivant :

### EXEMPLE 2

Il est relatif à des montages d'accumulateurs et à leurs performances.

Des assemblages de plaques négatives Mg Li, d'électrolytes: POE ... + Li I, LiClO₄ ... et des plaques positives TiS₂, V₆O₁₃ ont été effectués sous boîte à gants selon les méthodes déjà utilisées avec les plaques négatives en Li. Les accumulateurs ainsi constitués présentaient une f.e.m de 50 mV plus faible que celle des accus réalisés avec du lithium pur. La chute enregistrée peut être considérée comme négligeable par rapport à la valeur moyenne des f.e.m qui est de l'ordre de 2,5 V. L'énergie massique était de l'ordre de 400 kWh/kg et dans tous les cas ces systèmes montraient une excellente aptitude au cyclage.

On a mesuré l'aptitude au cyclage électrochimique de deux plaques négatives Li 10 Mg et Li 30 Mg décrites précédemment et qui ont travaillé dans un électrolyte comportant du polyoxyde d'éthylène et du LiClO₄.

On constate qu'au bout de 40 cycles, la capacité n'a pas varié.

En conclusion, le procédé objet de l'invention permet d'obtenir des alliages qui présentent, par rapport au lithium pur, les avantages suivants :
- Laminabilité accrue :
   . possibilité d'utiliser des cylindres métalliques
   . rapport de réduction plus fort d'où diminution du nombre de passes
   . meilleur fini de surface
   . bobinage aisé et sans collage ultérieur
   . faible coût de fabrication.
- Réactivité moins importante :
   . conservation aisée
   . risques d'incendie diminués.

En terme d'utilisation en tant que plaques négatives d'accumulateurs, on peut citer les avantages suivants :
- manutention aisée entraînant une facilité accrue de fabrication
- risque de formation de dendrites fortement diminué d'où utilisation de temps de recharge courts, de forts courants et d'un nombre de cycles plus important
- sécurité d'utilisation accrue.

## Revendications

1. Procédé d'obtention de feuilles minces à base de lithium dans lequel on :
- ajoute du magnésium à un bain de lithium fondu de manière à obtenir un alliage des deux métaux contenant entre 10 et 50 atomes pour cent de magnésium;
- solidifie l'alliage;
- transforme le solide en un produit de forme apte au laminage;
- lamine le produit à une épaisseur de 200 µm ou inférieur mais d'au moins 10 µm en passant ledit produit plusieurs fois entre des cylindres en acier à la température ambiante.

2. Procédé selon la revendication 1 caractérisé en ce que l'on soumet l'alliage à un traitement de recuit après au moins une passe de laminage.

3. Procédé selon la revendication 1 caractérisé en ce que le laminage s'effectue sous air sec.

4. Procédé selon la revendication 1, caractérisé en ce que le laminage s'effectue sous argon sec.

5. Feuille mince à base de lithium caractérisée en ce qu'elle a une épaisseur comprise entre 10 et 200 µm et qu'elle contient entre 10 et 50 atomes pour cent de magnésium, le solde étant constitué par le lithium.

6. Application des feuilles minces de la revendication 5 ou obtenues selon le procédé de la revendication 1 à la réalisation de plaques négatives pour accumulateurs.

## Claims

1. Process for obtaining lithium-based thin sheets in which
- magnesium is added to a bath of molten lithium so as to obtain an alloy of the two metals containing between 10 and 50 atoms percent of magnesium;
- the alloy is solidified;
- the solid is transformed into a product having a form suitable for rolling;
- the product is rolled to a thickness of 200 µm or less but of at least 10 µm by passing said product several times between steel cylinders at ambient temperature.

2. Process according to Claim 1, characterized in that the alloy is subjected to an annealing treatment after at least one rolling pass.

3. Process according to Claim 1, characterized in that rolling is carried out in dry air.

4. Process according to Claim 1, characterized in that rolling is carried out in dry argon.

5. Lithium-based thin sheet, characterized in that it has a thickness of between 10 and 200 m and that it contains between 10 and 50 atoms percent of magnesium, the remainder consisting of lithium.

6. Application of the thin sheets from Claim 5 or obtained by the process from Claim 1 to the production of negative plates for accumulators.

## Patentansprüche

1. Verfahren zur Herstellung dünner Folien auf Lithiumbasis, bei dem man:
- Magnesium einem Bad geschmolzenen Lithiums derart zusetzt, um eine zwischen 10 und 50 Atomprozent Magnesium enthaltende Legierung der zwei Metalle zu erhalten;
- die Legierung erstarrt;
- den Festkörper zu einem Erzeugnis einer zum Walzen geeigneten Form umformt;
- das Erzeugnis auf eine Dicke von 200 µm oder darunter, aber mindestens 10 µm walzt, indem man das Erzeugnis mehrmals zwischen Zylindern aus Stahl bei der Umgebungstemperatur durchfördert.

2. Verfahren nach dem Anspruch 1,
dadurch gekennzeichnet, daß man die Legierung nach wenigstens einem Walzstich einer Anlaßbehandlung unterwirft.

3. Verfahren nach Anspruch 1,
dadurch gekennzeichnet, daß das Walzen unter trockener Luft erfolgt.

4. Verfahren nach dem Anspruch 1, dadurch gekennzeichnet, daß das Walzen unter trockenem
Argon erfolgt.

5. Dünne Folie auf Lithiumbasis,
dadurch gekennzeichnet, daß sie eine Dicke im Bereich von 10 bis 200 µm hat und daß sie zwischen 10 und 50 Atomprozent Magnesium enthält, wobei der Rest aus Lithium besteht.

6. Verwendung der dünnen Folien des Anspruchs 5 oder der gemäß dem Verfahren des Anspruchs 1 erhaltenen zur Herstellung von negativen Platten für Akkumulatoren.
